# EUROPEAN PATENT APPLICATION

(11) **EP 4 450 852 A1**
(43) Date of publication of application: **23.10.2024**
(21) Application number: 22906010.8
(22) Date of filing: 30.09.2022
(51) Int. Cl.: F16K 1/02

(54) **STOP VALVE AND AIR CONDITIONING UNIT COMPRISING SAME**

(30) Priority: 18.12.2021 CN 202123211188 U
(71) Applicant: Zhejiang Dunan Artificial Environment Co., Ltd., Shaoxing Zhejiang 311835 (CN)
(72) Inventor: HUA, Ligang, Shaoxing, Zhejiang 311835 (CN); LOU, Feng, Shaoxing, Zhejiang 311835 (CN); CHEN, Diyong, Shaoxing, Zhejiang 311835 (CN); ZHOU, Feng, Shaoxing, Zhejiang 311835 (CN)
(74) Representative: Meyer-Dulheuer MD Legal Patentanwälte PartG mbB
(86) International application number: PCT/CN2022/123353
(87) International publication number: WO 2023/109258

(57) **Abstract**

A stop valve (100) and an air conditioning unit (200) including same are provided. The stop valve (100) includes: a valve body (10) made of stainless steel, which includes at least one of a first opening (11) and a second opening (12); a valve core (20), at least part of the valve core (20) being provided in the valve body (10), and the valve core (20) being able to move in the valve body (10) such that the first opening (11) and the second opening (12) can be communicated or separated; a second connecting pipe (121) made of stainless steel, the second connecting pipe (121) being provided at the second opening (12); and a single connector (50), which is connected to the valve body (10) via the second connecting pipe (121), and a second thread (51) is provided on the outer surface of a sidewall of the single connector (50).

## Description

### CROSS-REFERENCE TO RELATED APPLICATION

This application claims priority to Chinese patent application No. 202123211188.9, filed on December 18, 2021, and titled "STOP VALVE AND AIR CONDITIONING UNIT COMPRISING SAME", and the content of which is hereby incorporated by reference in its entirety.

### TECHNICAL FIELD

The present application relates to the field of refrigeration, in particular, to a stop valve and an air conditioning unit comprising the same.

### BACKGROUND

In air conditioning units, a stop valve plays a significant role of cutting off and throttling the medium in the pipeline where the stop valve locates in. The opening and closing component of the stop valve is the valve core, and the valve core is mainly configured to cut off the medium in a low temperature environment.

In the related stop valves, the connecting pipe of the stop valve is connected to the pipeline of the air conditioning unit by welding. When a user uses the stop valve, the stop valve should be welded. However, an installation site of the air conditioning unit generally does not meet welding conditions, resulting in inconvenient installation.

### SUMMARY

A stop valve is provided on the basis of the embodiments of the present application.

A stop valve includes: a valve body made of stainless steel, wherein the valve body is at least provided with a first opening and a second opening; a valve core, wherein at least part of the valve core is disposed in the valve body, and the valve core is capable of moving in the valve body to make the first opening and the second opening be in communication with each other or out of communication; a second connecting pipe made of stainless steel, wherein the second connecting pipe is disposed at the second opening; and a single connector, wherein the single connector is connected to and in communication with the valve body via the second connecting pipe, and an outer surface of a sidewall of the single connector is provided with a second thread.

In some embodiments, the single connector is made of stainless steel.

In some embodiments, an end of the second connecting pipe extends into the single connector and is connected to and in combination with the single connector.

In some embodiments, the outer surface of the sidewall of the single connector is provided with a third protrusion, the third protrusion extends along a radial direction of the single connector, the third protrusion is located between the valve body and the second thread, and the third protrusion is provided with at least two second planes parallel with each other.

In some embodiments, the third protrusion is provided with six second planes.

In some embodiments, the single connector is provided with a through hole inside, an inner surface of the through hole is provided with a restriction portion, and an end of the second connecting pipe extends into the through hole and abuts against the restriction portion.

In some embodiments, the valve body is provided with a valve seat, the valve seat is provided with a valve port, and the valve port is in communication with the first opening; an opening at an end of the valve body away from the valve seat is provided with an end cap, the valve core includes a connecting section and an operation section connected with each other, and the operating section extends through the end cap; and an end surface at an end of the operating section away from the connecting section is provided with a groove, the groove is provided with at least two first planes parallel to each other; or, an outer surface of the operating section is provided with at least two first planes parallel to each other.

In some embodiments, an outer surface of the connecting section is provided with a first sealing member, and the first sealing member abuts against an inner surface of the valve body.

In some embodiments, each of both sides of the first sealing member is provided with a first protrusion, the first protrusions at both sides of the first sealing member define a first sealing slot, the first protrusion adjacent to the end cap is provided with a third sealing member, and the third sealing member is capable of abutting against the end cap.

In some embodiments, a side of the connecting section towards the valve port is provided with a second sealing member, an end surface of the valve seat towards the valve core is provided with a second protrusion, and the second sealing member is capable of abutting against the second protrusion.

In some embodiments, the stop valve further includes an air valve assembly, wherein the air valve assembly is connected to and in communication with the valve body.

In some embodiments, the air valve assembly includes a connecting body, wherein the connecting body is connected to and in communication with the valve body, and is configured as a channel through which a medium flows into the valve body.

In some embodiments, the air valve assembly further includes an air valve core, a shell and a fourth sealing member, the air valve core is disposed in the connecting body and configured for making an inside of the valve body and an inside of the connecting body be in communication with each other or out of communication, the shell is sleeved on an outer surface of a sidewall of the connecting body, the fourth sealing member is located between the shell and the connecting body, and configured for matching with the shell to seal the connecting body.

In some embodiments, the second connecting pipe is connected to and in communication with the valve body.

In some embodiments, the stop valve further includes a first connecting pipe, wherein the first connecting pipe is disposed at the first opening, and the first connecting pipe is connected to and in communication with the valve body.

In some embodiments, the single connector is fixed to the second connecting pipe by means of melting a base material, and/or, the second connecting pipe is fixed to the valve body by means of melting a base material.

The present application further provides a following technical solution.

An air conditioning unit includes a stop valve described above.

Details of one or more embodiments of the present application are presented in the accompanying drawings and description below. Other features, objects, and advantages of the present application will become apparent from the specification, the accompanying drawings, and the claims.

### BRIEF DESCRIPTION OF THE DRAWINGS

In order to better describe and illustrate those embodiments and/or examples of the application disclosed herein, reference may be made to one or more of the accompanying drawings. The additional details or examples used to describe the accompanying drawings should not be considered a limitation on the scope of any of the disclosed applications, the embodiments and/or examples presently described, and the best mode of these applications as presently understood.
FIG. 1 is a sectional view of a stop valve in an embodiment of the present disclosure.
FIG. 2 is a front view of a stop valve in an embodiment of the present disclosure.
FIG. 3 is a sectional view of a single connector of a stop valve in an embodiment of the present disclosure.
FIG. 4 is a top view of a stop valve in an embodiment of the present disclosure.
FIG. 5 is a stereo schematical diagram of a stop valve in an embodiment of the present disclosure.
FIG. 6 is a sectional view of a stop valve in an embodiment of the present disclosure.
FIG. 7 is a schematic diagram of an air conditioning unit in an embodiment of the present disclosure.

### Reference numerals.

100 represents a stop valve; 200 represents an air conditioning unit; 10 represents a valve body; 11 represents a first opening; 111 represents a first connecting pipe; 12 represents a second opening; 121 represents a second connecting pipe; 13 represents a valve seat; 131 represents a valve port; 132 represents a second protrusion; 20 represents a valve core; 21 represents an operating section; 211 represents a groove; 2111 represents a first plane; 212 represents a first thread; 22 represents a connecting section; 221 represents a first sealing member; 222 represents a first protrusion; 223 represents a first sealing slot; 224 represents a third sealing member; 225 represents a second sealing member; 23 represents a guiding section; 30 represents a support; 40 represents an end cap; 50 represents a single connector; 51 represents a second thread; 52 represents a through hole; 53 represents a restriction portion; 54 represents a third protrusion; 541 represents a second plane; 60 represents an air valve assembly; 61 represents a connecting body; 62 represents an air valve core; 63 represents a shell; and 64 represents a fourth sealing member.

### DETAILED DESCRIPTION

The technical solutions in embodiments of the present application will be clearly and completely described below in conjunction with the accompanying drawings in embodiments of the present application. Obviously, the described embodiments are only a part of the embodiments of the present application, but not all of the embodiments. Based on the embodiments in the present application, all other embodiments obtained by a person of ordinary skill in the art without making creative labor fall within the scope of protection of the present application.

It is noted that when a component is said to be "assembled to" another component, it may be directly on the other component or there may be a centered component. When a component is said to be "disposed on" another component, it may be set directly on the other component or there may be both centered components. When a component is considered to be "fixed to" another component, it may be fixed directly to the other component or there may be both centered components.

Unless otherwise defined, all technical and scientific terms used herein have the same meaning as commonly understood by those skilled in the art of the present application. Terms used herein in the specification of the present application are used only for the purpose of describing specific embodiments and are not intended to limit the present application. The term "or/and" as used herein includes any and all combinations of one or more related listed items.

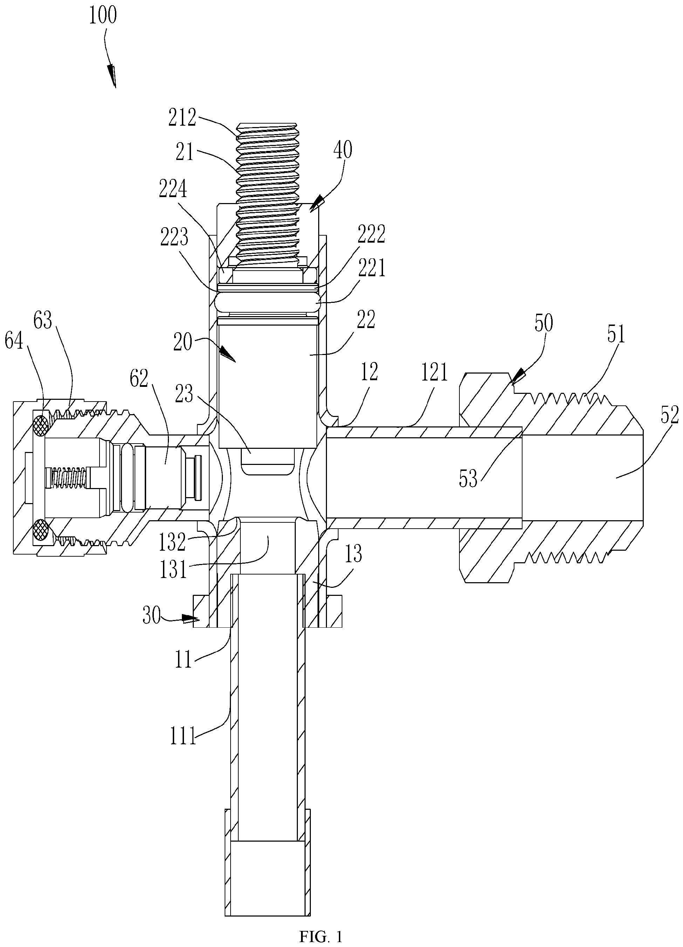

Referring to FIG. 1, a stop valve 100 provided in the present application is disposed in an air conditioning unit 200, and configured for realizing cutting off and communication of the pipelines.

Specifically, the stop valve 100 includes a valve body 10 made of stainless steel and a valve core 20. The valve body 10 is hollow, and configured for accommodating components such as the valve core 20, and the like. At least part of the valve core 20 is disposed in the valve body 10, and the valve core 20 is capable of moving along an axis of the valve body 10. In the present embodiment, the valve core 20 is made of stainless steel. In some embodiments, the valve core 20 can be made of materials such as brass, and the like.

The valve body 10 is provided with a first opening 11 and a second opening 12. The stop valve 100 further includes a first connecting pipe 111 and a second connecting pipe 121. The first connecting pipe 111 is disposed in the first opening 11, and the second connecting pipe 121 is disposed in the second opening 12. The first connecting pipe 111 and the second connecting pipe 121 are defined as an inlet of the medium or an outlet of the medium, respectively. When the first connecting pipe 111 is defined as the inlet of the medium, the medium flows into the stop valve 100 from the first connecting pipe 111, and then flows into the valve body 11 via the first opening 11. If the stop valve 100 is in an opened state, the medium flows out of the stop valve 100 sequentially from the second opening 12 and the second connecting pipe 12. Vice versa, the medium can flow into the valve body 10 sequentially from the second connecting pipe 121 and the second opening 12, and flows out of the stop valve 100 sequentially from the first opening 11 and the first connecting pipe 111. Both the first connecting pipe 111 and the second connecting pipe 121 are made of stainless steel, and are connected to and in communication with the valve body 10 by means of welding and the like. The cost of the stop valve 100 can be decreased, and since the materials of the first connecting pipe 111 and the second connecting pipe 121 are the same with that of the valve body 10, a welding difficulty between the first connecting pipe 111 or the second connecting pipe 121 and the valve body 10 can be reduced.

Furthermore, the first connecting pipe 111 and the second connecting pipe 121 are welded to the valve body 10 by means of melting a base material, for example, welded by means of laser welding, argon arc welding, and the like, and deformation caused by such methods is small.

The valve body 10 is provided with a valve seat 13, the valve seat 13 is provided with a valve port 131, the valve port 131 is in communication with the first opening 11. When the valve core 20 abuts against the valve seat 13, the first opening 11 is out of communication with the second opening 12. In the present embodiment, the valve seat 13 is made of stainless steel. In some embodiments, the valve seat 13 can be made of brass.

The valve seat 13 and the valve body 10 are independently produced and connected to each other. For example, the valve seat 13 can be fixed to the valve body 10, and the like. Since the stainless steel is relatively hard, producing the valve seat 13 and the valve body 10 independently can facilitate the processing process and lowering the cost. In addition, the valve seat 13 and the valve body 10 can be used on stop valves 100 having different structures, and the universality and the flexibility of the valve body 10 and the valve seat 13 can be improved.

The valve seat 13 can be fixed to the valve body 10 by means of welding, and a fastness between the valve seat 13 and the valve body 10 can be improved.

Both ends of the valve body 10 are provided with openings. An opening at an end of the valve body 10 away from the valve seat 13 is provided with an end cap 40. The end cap 40 is provided with an internal thread inside, and an outer surface of a sidewall at an end of the valve core 20 is provided with a first thread 212. By threadedly matching between the internal thread of the end cap 40 and the first thread 212 of the valve core 20, the valve core 20 can move along the axis of the valve body 20.

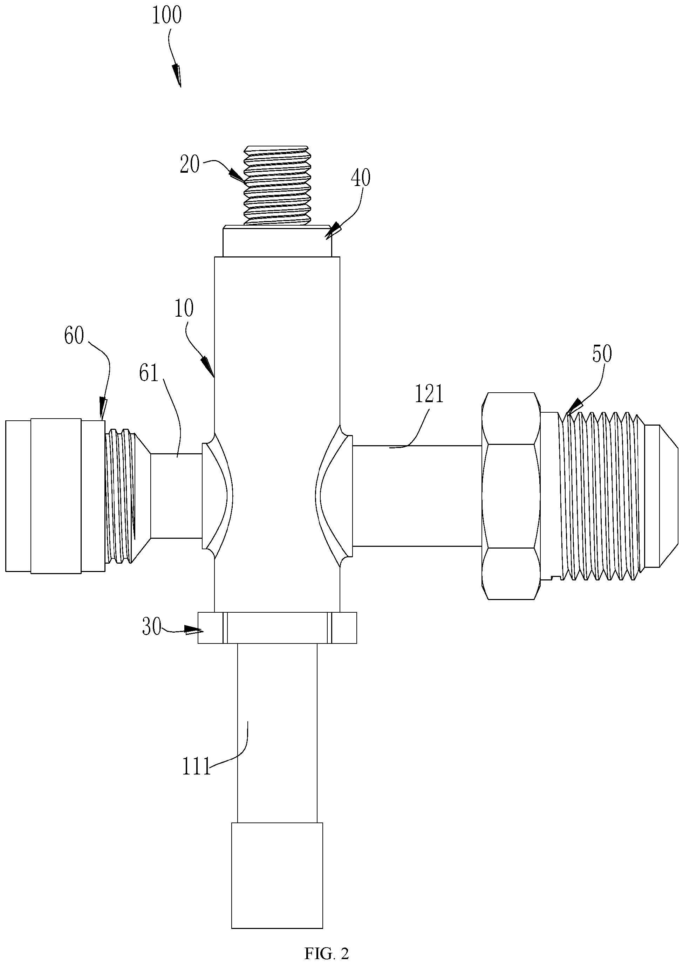

Referring to FIG. 1 and FIG. 2, the valve core 20 includes a connecting section 22 and an operation section 21 connected with each other. The first thread 212 is disposed on the operating section 21, and the operating section 21 extends through the end cap 40. An end surface at an end of the operating section 21 away from the connecting section 22 is provided with a groove 211, and the groove 211 is provided with at least two first planes parallel to each other inside, which are configured for allowing an external tool to rotate the valve core 20.

Furthermore, six first planes 2111 are sequentially disposed in the groove 211, and the six first planes 2111 sequentially joins with each other. That is, three pairs of first planes are disposed in the groove 211 and configured for operation of a hex wrench.

In some embodiments, an outer surface of the operating section 21 is provided with at least two first planes 2111 parallel to each other, and the at least two first planes 2111 always extend out of the end cap 40. That is, even though the valve core 20 abuts against the valve seat 13, the at least two first planes 211 are outside the end cap 40, which can facilitate operation.

An outer surface of the connecting section 22 is provided with a first sealing member 221, and the first sealing member 221 abuts against an inner surface of the valve body 10.

Each of both sides of the first sealing member 221 is provided with a first protrusion 222, and the first protrusions 222 at both sides of the first sealing member 221 define a first sealing slot 223. The first protrusion 222 adjacent to the end cap 40 is provided with a third sealing member 224, and the third sealing member 224 is capable of abutting against the end cap 40. When the stop valve 100 fully opens, the third sealing member 224 abuts against the end cap 40 and plays a role of buffer and restriction.

The valve core 20 further includes a guiding section 23 connected to the connecting section 22. The guiding section 23 is capable of extending into the valve port 131, and plays a role of guiding moving of the valve core along the axis of the valve body 10. When the stop valve 100 is closed, the guiding section 23 extends into the valve port 131 and abuts against the inner surface of the valve port 131.

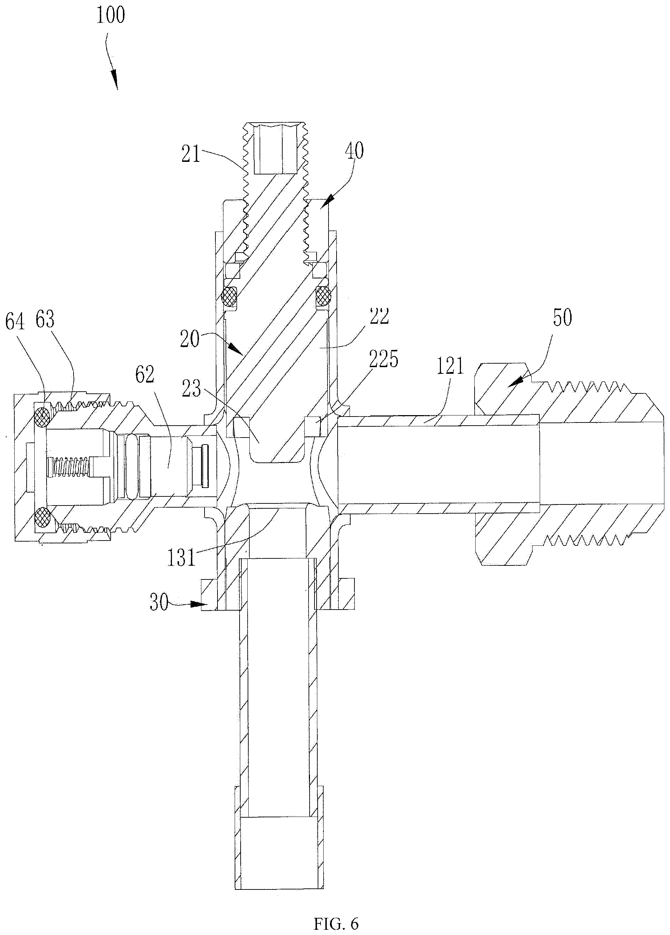

A side of the connecting section 22 towards the valve port 131 is provided with a second sealing member 225 (as shown in FIG. 6). An end surface of the valve seat 13 towards the valve core 20 is provided with a second protrusion 132, and the second sealing member 225 is capable of abutting against the second protrusion 132, so as to improve sealing performance of the valve core to the valve port 131.

Furthermore, the second sealing member 225 includes a pure copper gasket or a sealing ring. Since both the pure cooper gasket and the sealing ring are soft, the sealing performance can be improved.

Furthermore, the second protrusion 132 is ring-shaped, and disposed along a circumference of the valve port 131. Optionally, the valve seat 13 includes a plurality of second protrusions 132, and the plurality of second protrusions 132 are evenly disposed along the circumference of the valve port 131.

A thickness of the second protrusion 132 gradually decreases along a direction towards the valve core 20, so that an end of the second protrusion 132 adjacent to the valve core 30 is relatively sharp and can insert into the second sealing member 225.

The stop valve 100 further includes a single connector 50. The single connector 50 is connected to and in communication with the valve body 10 via the second connecting pipe 121. For example, the single connector 50 can be fixed to and in communication with the valve body 10 via the second connecting pipe 121. An outer surface of a sidewall of the single connector 50 is provided with a second thread 51. Since an outer size of the single connector 50 is relatively great, the single connector 50 cannot directly extend into the second opening 12. By transfer with the second connecting 121, connection between the single connector 50 and the second opening 12 is convenient. The second thread 51 provided at the outer surface of the sidewall of the single connector 50 can be directly connected to a nut in the pipeline of the air conditioning unit 200 by means of threaded connection. In the installation site, it is not necessary to connected an indoor unit to an outdoor unit by means of welding, and the installation of the air conditioning unit 200 can be convenient.

The single connector 50 is provided with a through hole 52 inside, and the through hole 52 extends from an end of the single connector 50 to the other end of the single connector 52. The through hole 52 is in communication with the second connecting pipe 121, thereby realizing circulation of the medium.

The single connector 50 is made of stainless steel and fixed to the second connecting pipe 121 by means of welding, which not only decreases the cost, but also reduces the difficulty of the welding process.

The single connector 50 is fixed to the second connecting pipe 121 by means of melting a base material.

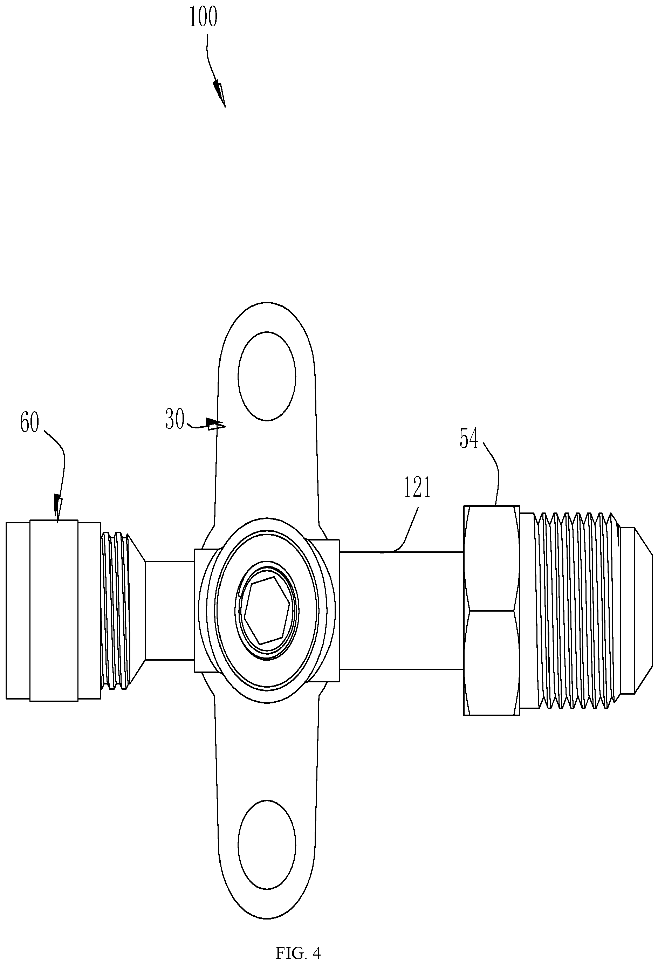

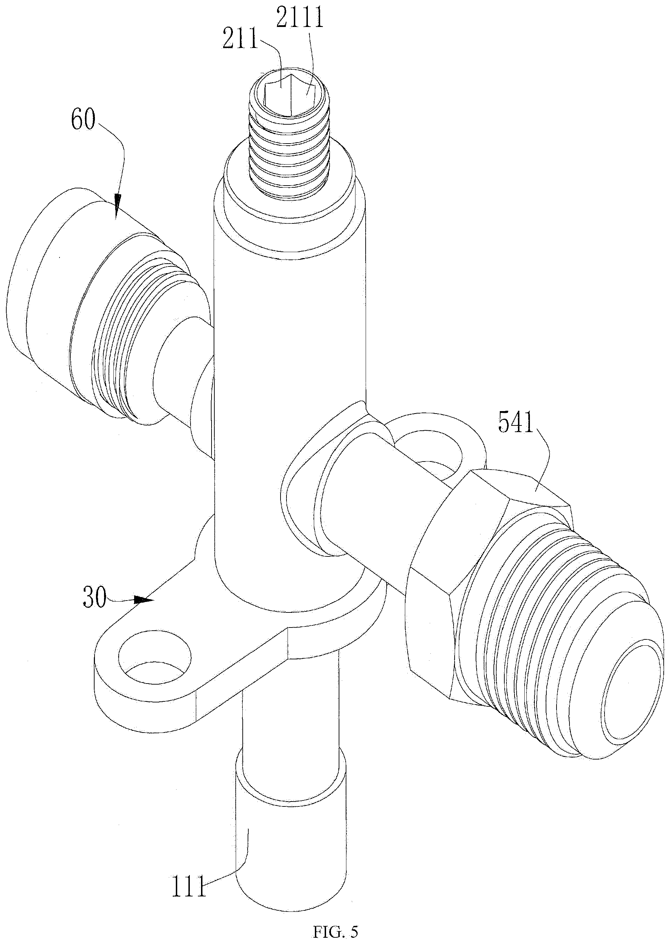

Referring to FIG. 4 and FIG. 5, the outer surface of the sidewall of the single connector 50 is provided with a third protrusion 54. The third protrusion 54 is located between the valve body 10 and the second thread 51 of the single connector 50. That is, the third protrusion 54 is more adjacent to the valve body 10 relative to the second thread 51. The third protrusion 54 is provided with at least two second planes 541 parallel with each other, which are configured for allowing an external tool to clamp. In the process of matching the single connector 50 with the nut in the pipeline of the air conditioning unit 200, the nut should be screwed. In the process of screwing the nut, the second plane 541 is clamped, so as prevent the nut to drive the second connecting pipe 121 to twist while the nut rotates, thereby avoiding driving the valve body 10 and the first connecting pipe 111 to twist. Since the a pipeline connected to the first connecting pipe 111 is fixed, torsion of the first connecting pipe 111 may lead to torsion of the first connecting pipe 111 relative to the pipeline and even breakage.

Furthermore, the third protrusion 54 is provided with a hexagon-shaped surface. That is, the third protrusion is provided with third pairs of second planes 541 parallel with each other. The six second planes sequentially join with each other, so that the external tool can clamp the single connector 50 from different angles. The external tools include adjustable wrenches, non-adjustable wrenches, and the like.

An end of the second connecting pipe 121 extends into the single connector 50, so as to improve a welding strength between the second connecting pipe 121 and the single connector 50.

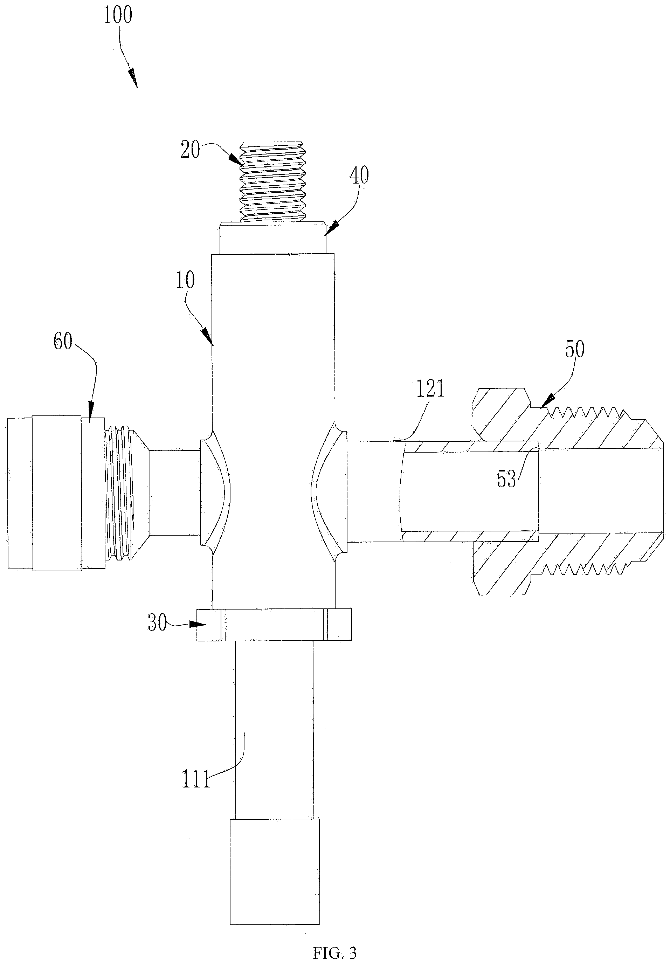

Referring to FIG. 3, an inner surface of the through hole 52 is provided with a restriction portion 53. The second connecting pipe 121 abuts against the restriction portion 53, so as to avoid the second connecting pipe 121 extending unduly deep into the single connector 50.

In the present embodiment, the restriction portion 53 is a step-shaped surface. In some embodiments, the restriction portion 53 can be a protrusion, and the like.

The stop valve 100 further includes a support 30. The support 30 is ring-shaped and sleeved on the valve body 10 and connected to the valve body 10. For example, the support 30 is fixed to the valve body 10. The support 30 and the valve body 10 can be independently produced.

The support 30 is fixed to the valve body 10 by means of welding, and is convenient to process.

In addition, the stop valve 100 further includes an air valve assembly 60. The air valve assembly 60 is connected to and in communication with the valve body 10. In the present embodiment, the air valve assembly 60 is opposite to the second opening 12 and defined as a gas inlet or a gas outlet, and configured for supplying the medium or discharging the medium for the whole air conditioning unit 200. In some embodiments, an axis of the air valve assembly 60 is perpendicular to an axis of the second opening 12, and the air valve assembly 60 can be disposed at other positions of the valve body 10.

In some embodiments, the stop valve 100 can be provided without an air valve assembly 60.

The air valve assembly 60 includes a connecting body 61. The connecting body 61 is connected to and in communication with the valve body 10, and is configured as a channel through which a medium flows into the valve body 10. The connecting body 61 is made of stainless steel, and is separated from the valve body 10, which can facilitate processing of the connecting body 61.

The air valve assembly 60 further includes an air valve core 62, a shell 63 and a fourth sealing member 64. The air valve core 62 is disposed in the connecting body 61 and configured for making an inside of the valve body 10 and an inside of the connecting body 61 be in communication with each other and out of communication. The shell 63 is sleeved on an outer surface of a sidewall of the connecting body 61, and configured for protecting the air valve core 62 and prevent external impurities from entering the air valve assembly 60. The fourth sealing member 64 is located between the shell 63 and the connecting body 61, and configured for matching with the shell 63 to seal the connecting body 61.

Specifically, an end of the air valve core 62 is provided with an elastic member (not shown). When the air valve core 62 does not suffer from an external pressure, the air valve core 62 can be kept in a closed state, and the connecting body 61 is kept sealed and insulate the inside of the valve body 10 from the outside world at this time. When the air valve core 62 suffers from the external pressure, the air valve core 62 extrudes the elastic member and moves towards the valve body 10, so as to release the sealing and make the inside of the valve body 10 be in communication with the inside of the connecting body 61, so that the medium can flow into the valve body 10 or flow out of the valve body 10. The elastic member is configured for restoring the air valve core 62.

In the mounting process, the second connecting pipe 121 is fixed to the valve body 10 by means of welding, then the single connector 50 is fixed to the second connecting pipe 121 by means of welding, and the first connecting pipe 111 is fixed to the pipeline of the air conditioning unit 200 by means of welding. The nut in the pipeline of the air conditioning unit 200 adjacent to the second connecting pipe 121 is threadedly matched with the single connector 50. The second plane 541 is clamped with an external tool, and the nut is screwed to the single connector 50.

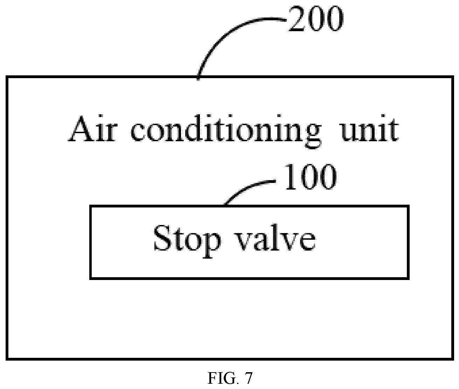

Referring to FIG. 7, the present application further provides an air conditioning unit 200, which includes the stop valve 100 described above.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present application.

The above-described embodiments are only several implementations of the present application, and the descriptions are relatively specific and detailed, but they should not be construed as limiting the scope of the present application. It should be understood by those of ordinary skill in the art that various modifications and improvements can be made without departing from the concept of the present application, and all fall within the protection scope of the present application. Therefore, the patent protection of the present application shall be defined by the appended claims.

## Claims

1. A stop valve, **characterized by** comprising
a valve body made of stainless steel, wherein the valve body is at least provided with a first opening and a second opening;
a valve core, wherein at least part of the valve core is disposed in the valve body, and the valve core is capable of moving in the valve body to make the first opening and the second opening be in communication with each other or out of communication;
a second connecting pipe made of stainless steel, wherein the second connecting pipe is disposed at the second opening; and
a single connector, wherein the single connector is connected to and in communication with the valve body via the second connecting pipe, and an outer surface of a sidewall of the single connector is provided with a second thread.

2. The stop valve of claim 1, wherein the single connector is made of stainless steel.

3. The stop valve of claim 1, wherein an end of the second connecting pipe extends into the single connector and is connected to and in combination with the single connector.

4. The stop valve of claim 1, wherein the outer surface of the sidewall of the single connector is provided with a third protrusion, the third protrusion extends along a radial direction of the single connector, the third protrusion is located between the valve body and the second thread, and the third protrusion is provided with at least two second planes parallel with each other.

5. The stop valve of claim 4, wherein the third protrusion is provided with six second planes.

6. The stop valve of claim 1, wherein the single connector is provided with a through hole inside, an inner surface of the through hole is provided with a restriction portion, and an end of the second connecting pipe extends into the through hole and abuts against the restriction portion.

7. The stop valve of claim 1, wherein the valve body is provided with a valve seat, the valve seat is provided with a valve port, and the valve port is in communication with the first opening;
an opening at an end of the valve body away from the valve seat is provided with an end cap, the valve core comprises a connecting section and an operation section connected with each other, and the operating section extends through the end cap; and
an end surface at an end of the operating section away from the connecting section is provided with a groove, the groove is provided with at least two first planes parallel to each other; or, an outer surface of the operating section is provided with at least two first planes parallel to each other.

8. The stop valve of claim 7, wherein an outer surface of the connecting section is provided with a first sealing member, and the first sealing member abuts against an inner surface of the valve body.

9. The stop valve of claim 8, wherein each of both sides of the first sealing member is provided with a first protrusion, the first protrusions at both sides of the first sealing member define a first sealing slot, the first protrusion adjacent to the end cap is provided with a third sealing member, and the third sealing member is capable of abutting against the end cap.

10. The stop valve of claim 7, wherein a side of the connecting section towards the valve port is provided with a second sealing member, an end surface of the valve seat towards the valve core is provided with a second protrusion, and the second sealing member is capable of abutting against the second protrusion.

11. The stop valve of claim 1, further comprising an air valve assembly, wherein the air valve assembly is connected to and in communication with the valve body;
the air valve assembly comprises a connecting body, wherein the connecting body is connected to and in communication with the valve body, and is configured as a channel through which a medium flows into the valve body;
the air valve assembly further comprises an air valve core, a shell and a fourth sealing member, the air valve core is disposed in the connecting body and configured for making an inside of the valve body and an inside of the connecting body be in communication with each other or out of communication, the shell is sleeved on an outer surface of a sidewall of the connecting body, the fourth sealing member is located between the shell and the connecting body, and configured for matching with the shell to seal the connecting body.

12. The stop valve of claim 1, wherein the second connecting pipe is connected to and in communication with the valve body.

13. The stop valve of claim 1, further comprising a first connecting pipe, wherein the first connecting pipe is disposed at the first opening, and the first connecting pipe is connected to and in communication with the valve body.

14. The stop valve of claim 1, wherein the single connector is fixed to the second connecting pipe by means of melting a base material, and/or, the second connecting pipe is fixed to the valve body by means of melting a base material.

15. An air conditioning unit, **characterized by** comprising a stop valve of any one of claims 1 to 14.
